# EUROPÄISCHE PATENTSCHRIFT

(11) **EP 3 460 351 B1**
(45) Veröffentlichungstag und Bekanntmachung des Hinweises auf die Patenterteilung: **24.02.2021**
(21) Anmeldenummer: 18196176.4
(22) Anmeldetag: 24.09.2018
(51) Int. Cl.: F24F 13/30, F24F 5/00

(54) **MOBILES LUFTKLIMAGERÄT MIT LATENTWÄRMESPEICHER**
MOBILE AIR CONDITIONING SYSTEM WITH LATENT HEAT ACCUMULATOR
APPAREIL DE CONDITIONNEMENT D'AIR MOBILE À ACCUMULATEUR DE CHALEUR LATENTE

(30) Priorität: 25.09.2017 DE 102017122149
(43) Veröffentlichungstag der Anmeldung: 27.03.2019
(73) Patentinhaber: Friedrich, Thomas, 54470 Bernkastel-Kues (DE)
(72) Erfinder: Friedrich, Thomas, 54470 Bernkastel-Kues (DE)
(74) Vertreter: Riebling, Peter

(56) Entgegenhaltungen:
- DE-U1- 20 310 593
- US-A- 5 944 089
- US-A1- 2003 183 375
- US-A1- 2011 083 827

## Beschreibung

Die Erfindung betrifft ein mobiles Luftklimagerät mit Latentwärmespeicher nach dem Oberbegriff des Patentanspruchs 1.

Mobile Luftklimageräte sind bisher nur in der Form bekannt geworden, dass mit einem elektrisch betriebenen Kompressor ein Kältemittel verdichtet wird, welches über einen Wärmetauscher entspannt wird und hierdurch ein Wärmeentzug aus der Umgebungsluft stattfindet.

Nachteil derartiger mobiler Luftklimageräte ist jedoch der hohe elektrische Leistungsverbrauch, die Geräuschentwicklung und die fehlende Mobilität, weil mindestens ein hochstromführender Elektroanschluss vorhanden sein muss und dafür gesorgt werden muss, dass die erzeugte Warmluft auch abgeführt wird. Um den Nachteil eines ständigen Stromanschlusses zu vermeiden, ist es bekannt, ein solches mobiles Klimagerät als PCM-Pufferspeicher auszubilden. PCM ist die englische Abkürzung für Phase Change Material (Phasenwechselmaterial). Es handelt sich dabei um ein Wärmespeichermaterial, welches den reversiblen Phasenübergang, beispielsweise von fest zu flüssig zur Wärme- bzw. zur Kältespeicherung nutzt. Eine typische Eigenschaft von PCM ist die hohe Speicherdichte bei geringer Temperaturdifferenz. In Gebäuden lassen sich durch den Einsatz von PCM-Systemen:
1. Temperaturen puffern, z. B. in dynamisch wärmebelasteten Räumen
2. eine passive Kühlwirkung erzeugen
3. Wirkungsgrade von konventionellen Heiz-/ Kühlsystemen verbessern
4. Lastspitzen glätten bzw. verschieben
5. die Netzdienlichkeit von Heiz-/Kühlsystemen verbessern.

In der WO 2016/140598 A2 ist ein mobiles Klimagerät beschrieben, bei dem in einem geschlossenen Kreislauf ein Kältemittel in einem mit einem PCM-Material gefüllten Behälter umgepumpt wird. Allerdings ist der Energieübertragungsgrad zwischen dem mänderförmigen, das Kältemittel führenden Kältekreislauf und dem PCM-Material ungünstig.

Die EP 2 623 914 A1 zeigt zwar einen mit einem wärmespeichernden Medium gefüllten Behälter, in dem allerdings nur mäanderförmige Rohre eines Kältekreislaufs angeordnet sind, was mit einem schlechten EnergieÜbertragungsgrad verbunden ist.

Die US 2003/0183375 A1 zeigt in der gleichen Weise einen PCM-gefüllten Wärmetauscher mit einem darin angeordneten mäanderförmigen Rohrsystem. Auch hier ist ein ungünstiger Energieübertragungsgrad zu erwarten.

Die US 2011/0083827 A1 offenbart ein mobiles Luftklimagerät mit den Merkmalen des Oberbegriffs des Patentanspruchs 1. Der Wärmetauscher umfasst ein wärmeisoliertes Gehäuse, in welchem mit einem PCM gefüllte Rohre angeordnet sind. Das Gehäuse bzw. die Zwischenräume zwischen den Rohren sind mit einem flüssigen Kühlmedium in Form eines Wasser-Glykol Gemischs gefüllt.

Die DE 203 10 593 U1 offenbart PCM-Elemente, die als mit einem PCM gefüllte zylindrische oder polygone Rohre ausgebildet sind. Die Rohre können in einem Gehäuse zu einem Rohrregister zusammengefasst werden, das von der zu kühlenden Raumluft umströmt wird.

Der Erfindung liegt die Aufgabe zugrunde, ein mobiles Luftklimagerät der eingangs genannten Art so weiterzubilden, dass bei wesentlich weniger elektrischem Verbrauch eine gute Klimatisierungswirkung mit hohem Wirkungsgrad möglich ist.

Zur Lösung der gestellten Aufgabe wird erfindungsgemäß ein mobiles Luftklimagerät mit den Merkmalen von Anspruch 1 vorgeschlagen. Zusätzlich wird ein Verfahren zum Betrieb eines Luftklimagerätes mit den Merkmalen von Anspruch 7 vorgeschlagen. Bevorzugte Ausführungsformen sind in den abhängigen Ansprüchen definiert.

Dabei ist vorgesehen, dass das mobile Luftklimagerät nunmehr mit einem Latentwärmespeicher arbeitet, dem ein Luft-Wasser-Wärmetauscher vorgeschaltet ist und dass ein verbesserter Energieübertragungsgrad im PCM-Pufferspeicher zur Verfügung gestellt wird.

Solche Latentwärmespeicher haben hohe Schmelz-, Lösungs- oder Verdampfungsenthalpien. Sie sollten zudem auch eine große spezifische Wärmekapazität besitzen, da auch die sensible Wärme zur Speicherung verwendet wird. Es werden drei Typen von PCM unterschieden: die eutektischen Wasser-Salzlösungen, organische PCM's und die Salzhydrate zu denen auch das Natriumacetat gehört.

Latentwärmespeicher funktionieren durch die Ausnutzung der Enthalpie thermodynamischer Zustandsänderungen eines Speichermediums. Das dabei am häufigsten genutzte Prinzip ist die Ausnutzung des Phasenübergangs festflüssig und umgekehrt (Erstarren-Schmelzen).

Beim Aufladen des Inhalts kommerzieller Latentwärmespeicher werden meist spezielle Salze oder Paraffine als Speichermedium geschmolzen, die dabei sehr viel Wärmeenergie (Schmelzwärme) aufnehmen, wie z. B. Dikaliumhydrogenphosphat-Hexahydrat. Das Entladen findet als Erstarren statt, wobei das Speichermedium die zuvor aufgenommene große Wärmemenge als Erstarrungswärme wieder an die Umgebung abgibt.

Für technische Anwendungen als Latentwärmespeicher ist eine Unterkühlung der Schmelze in der Regel unerwünscht. Daher müssen dem Material geeignete Keimbildner zugesetzt werden, die eine Kristallisation kurz unterhalb der Schmelztemperatur bewirken.

Einem ähnlichen Prinzip folgt die Ausnutzung der Enthalpie reversibler chemischer Reaktionen, so zum Beispiel von auf Chemisorption beruhenden Absorptions- und Desorptionsprozessen. Das geschieht in sogenannten thermochemischen Wärmespeichern, die eine noch höhere Energiedichte ermöglichen.

Moderne Latentwärmespeichermaterialien auf Salz- oder Paraffinbasis haben für verschiedene Anwendungen entwickelte physikalische Eigenschaften und sind für nahezu alle Temperaturbereiche erhältlich.

Alle genannten Materialien werden zur Ausführung der Erfindungsidee verwendet.

Die Probleme des Stands der Technik sowie die Vorteile der Erfindung sind nachfolgend aufgeführt:
- PCM als große Masse lässt sich nur schwer vollständig aktivieren.
- Das aktivierende Element (Luft, oder Wasser) welches in geführten Leitungen oder Kanälen geführt wird, aktiviert das PCM zuerst in einer nächsten Umgebung (schichtweise entlang der zuführenden Energieleitung).
- Das führt dazu, dass u.U. das aktivierte Material als Dämmschicht gegenüber dem weiter entfernte Material wirksam ist, weshalb eine gleichmäßige Aktivierung über die Zeit nicht gelingt. Das liegt u.a. auch an dem geringen Temperaturunterschied zwischen dem aktivierten und nicht aktivierten Material, da dieser Bereich exakt innerhalb der Schalttemperatur des PCM-Materials lieg.
- Deshalb hat man auch bislang versucht, das PCM in dünnen Schichten zu applizieren, um die zu aktivierende Schicht in der Tiefe möglichst gering zu halten.
- Dabei betrifft eine Anwendung die Verwendung von PCM in Form einer Mikroverkapselung. Kleine Einheiten lassen sich in einem Trägermaterial schichtweise aufgetragen, um die Tiefe der "PCM-Schicht" zu begrenzen. Dabei handelt es sich z.B. um dünne Putze, oder dünnwandige Platten.
- Dabei kann die Luft entlang der großen Oberfläche vorbei streichen und somit den Austausch der Energie aus und in das PCM-Material bewerkstelligen, allerdings nur in begrenztem Umfang.
- Eine weitere Ausführung besteht darin, dünne plattenförmigen Elemente mit geringer Stärke mit einer Schicht von PCM zu füllen, so dass auch hier die Möglichkeit besteht, entlang der großen Oberfläche die Luft vorbei strömen zu lassen und dann die Energie umzuwandeln.
- Die dünnen Platten lassen sich auch senkrecht oder waagerecht unterhalb einer Decke anordnen, um dann den Luftstrom im Raum für die Be- und Entladung des PCM's zu nutzen.
- Weitere Ansätze nutzen die so genannten Makroverkapselungen von PCM. Behälter oder Gefäße in überschaubarer Größe mit einer scheibenförmigen (im Gegensatz zu einer Kugel) Ausbildung, analog den vorgenannten dünnen Platten, nehmen eine begrenzte Menge an PCM auf. Diese Elemente werden dann in einer Trägerflüssigkeit (z.B. Wasser innerhalb eines Tanks) gelagert, um dann über den Austausch zwischen PCM-Behälter und Transportflüssigkeit die Energie auszutauschen.
- Die genannten Techniken nutzen mehrheitlich die Luft als Energietransportmittel und das PCM bleibt in überschaubaren Einheiten (Mikro- bis Makroverkapselung) zugänglich. Die genannte Makroverkapselung erfolgt nur über den Energietransport mit Wassen.
- Über großformatige mit PCM gefüllte Behälter ist bislang über wirksame Methoden zum Be- und Entladen nichts bekannt.
- Die Energie kann nicht über Luft oder Wasser als Energietransportmittel in das Material direkt ein- oder ausgetragen werden.
- Der neue Ansatz besteht darin, den mit PCM gefüllten Behälter mit einem dichten Netz von Rohrleitungen aus Metall zu durchziehen. Die direkte Umgebung der Rohrleitungen ist zudem mit einem dichten Paket von Lamellen aus Metall umgeben, so dass das einem Rohrleitungsabschnitt zugeordnete Volumen direkt über die Wärmeleitung in dem Metall angesprochen wird.
- Ein dichtes Netz an Rohrleitungen mit aufgesetzten Lamellen (Schottblech) entspricht einem wirkungsvollen Wärmetauscher und ist bekannt als Kühlereinheit.
- In den Rohrleitungen zirkuliert zudem das Medium Wasser, da es gegenüber der Luft größere Mengen von Energie auch bei kleinen Temperaturunterschieden transportieren kann.
- Die Umwandlung des wassergeführten Energietransports an den ev. aus Nutzersicht gewünschten Luftstrom, erfolgt ebenfalls über einen weiteren Wärmetauscher, bei dem die durchströmende Luft die Wärmeenergie an dem dichten Rohrnetz und seinen Lamellen aufnimmt.
- Der neue Ansatz zum Be- und Entladen von großen Einheiten von PCM erfolgt ausschließlich mit dem Medium Wasser, das seine Wärmeenergie über ein dichtes Netz an Leitungen inklusive der aufgesetzten Lamellen (analog der Bauweise eines Kühlers) abgibt.
- In Verbindung mit einer Bauteilaktivierung bietet sich jetzt die Möglichkeit an, das in den zugehörigen Rohregistern (im Betonquerschnitt einbetoniert) zirkulierende Wasser direkt mit dem Wärmetauscher (Kühler) in dem PCM gefüllten Behälter kurzzuschließen. Dieser Kurzschluss garantiert eine schnelle und wirksame Be- und Entladung.
- Die mit PCM gefüllten Behälter können nun direkt in dem Deckenhohlraum eingebaut werden.
- In diesem Fall muss nicht mehr der Weg über die Luft zwischen Decke und PCM gefüllter Platte gewählt werden, um die Energie in den Raum zu bringen.
- PCM ist nunmehr ein direkt ansprechbarer und kontrollierbarer Energiespeicher, der über das Medium Wasser Be- und Entladen wird. Das Medium Luft tauscht seine Energie über einen Wärmetauscher mit dem Medium Wasser aus.

Die Innovationskraft der neuen Technik besteht in Folgendem:
- Es gelingt, auch große zusammenhängende Mengen von PCM ohne Mikro- und Makroverkapselung effizient anzusprecher.
- Mit dieser neuen Technik braucht es keine Verkapselung des PCM in kleinste bis mittelgroße und zudem speziell geformte Behältnisse mehr, sondern das PCM wird in jeglicher Form eines Behälters beliebiger Größe eingelagert.
- Große aber auch kleine Behälter ermöglichen den gezielten Einsatz von PCM-Material mit unterschiedlichen Schalttemperaturen zur Optimierung der Speichermöglichkeiten.
- Das erlaubt, PCM in Behältern als zentrale aber auch als dezentrale Einheiten auf die jeweiligen Bedürfnisse abgestimmt einzusetzen.
- Dazu wird ein höchst feines Netz an untereinander verbundenen Metallbauteilen genutzt.
- Das feine Netz bzw. Gerüst von Metallbauteilen ist an ein ebenfalls weitläufiges Rohrleitungsnetz angeschlossen.
- Der Energietransport erfolgt ausschließlich über das Medium Wasser, was einen schnellen und effizienten Ablauf ermöglicht.
- Das PCM ist nicht mehr mit der Luft direkt verbunden, was andere Systeme bislang für die Energieübertragung nutzen.
- Dieser Ansatz erlaubt auch die direkte Verbindung mit den wassergeführten Rohrleitungen einer Bauteilaktivierung.

Mit der gegebenen technischen Lehre ergibt sich der Vorteil, dass nun die günstigen physikalischen Eigenschaften eines Latentwärmespeichers für die Klimatisierung von Räumen für mobile Luftklimageräte verwendet werden kann, ohne dass ein hochstromführender Elektroanschluss und dergleichen notwendig ist und ohne dass großvolumige, die erzeugte Wärme abführende Rohre nach draußen geführt werden müssen.

Die Erfindung ist bevorzugt auf die optimale Behandlung des Phasenwechsels mit dem PCM gerichtet, wie nachfolgend beschrieben wird.

Als vorteilhaft wurde erkannt, dass die Benetzung des PCM in einem Gehäuse (auch ein großes Gehäuse) ist durch die kombinierte Anordnung von Rohren und angeschlossenen Wärmeleitblechen sehr hoch ist und einen intensiven Wärmeaustausch ermöglichet.

Der Grad der Benetzung lässt sich ausdrücken mit der gesamten Fläche der Wärmeleitbleche bezogen auf das Volumen des gespeicherten PCM. Das beträgt 500 m2/m3. Wenn man diese Zahl in viele kleine Blechplatten aufteilt, die die Abmessungen von 1,0 m x 1,0 m haben, dann ist im Abstand von 2 mm jeweils eine Blechplatte angeordnet. Sinnbildlich sind die Blechplatten (wärmeleitbleche) an mit Rohrleitungen verbunden, die über Wasser die Wärmeenergie transportieren.

Damit ist sichergestellt, dass die kleinste Einheit von PCM einer entsprechenden Wärmequelle zugeordnet ist und somit das gesamte PCM in dem Behälter einheitlich verflüssigt oder kristallisiert werden kann (aufgrund der sehr engmaschigen Benetzung).

Dank dieser feingliedrigen Benetzung des PCM in dem Behälter ist das System in der Lage, das PCM äußerst schnell über das Energiemedium "Wasser" in den jeweilig anderen Aggregatzustand zu versetzen. Die Wandlung von fest nach flüssig und umgekehrt von flüssig nach fest geschieht für die gesamte PCM Masse dann sehr schnell. Dadurch wird auch die Kristallisationswärme sehr schnell frei.

Nach einem bekannten Stand der Technik versuchen viele Entwickler die bekannten Nachteile der PCM-Technik durch eine Verkapselung des PCM zu umgehen. Kleine Kügelchen, die mit PCM gefüllt sind, haben dann eine große Oberfläche, um gleichmässig Wärmeenergie aufzunehmen bzw. abzugeben. Auch bei Makroverkapselungen sucht man immer eine große Oberfläche bei kleinstem Volumen, um den Austausch der Energie besser zu gestalten. Während die Mikroverkapselung für die Energieaustausch mit Luft gedacht ist, sucht man bei den Makroverkapselungen die Energieaustausch über Wasser.

Das bekannte und auch schlechte träge Verhalten sonstiger PCM-Anwendungen liegt daran, dass das PCM nicht so feinmaschig mit einem Wärmeleitblech oder ähnlichem umgeben ist.

Ein zum Stand der Technik gehörendes Konkurrenzprodukt wirbt damit, dass sein System eine Benetzung von 65m2/m3 aufweist, was dort als sehr gut betrachtet wird.

Daraus ergibt sich die Problematik, dass die tatsächlich geringe vorhandene Oberfläche für die Benetzung das PCM nur eine langsame Arbeitsgeschwindigkeit ermöglicht, weil das System lange braucht, bis die Kristallisationsenergie abgegeben wird.

Ein weiterer Vorteil des erfindungsgemäßen PCM liegt darin, dass keine Verkapselung (weder Mikro- noch Makroverkapselung) gebraucht wird, damit ergibt sich der Vorteil, dass PCM in einem Behälter aufbewahrt werden kann. Bei Bedarf kann das PCM gewechselt werden und durch ein PCM mit einem anderen Schaltpunkt (Temperatur, wann die Energie freigegeben wird) ersetzt werden. Bei den bekannten Mikro- und teilweise auch bei den Makroverkapselungen ist das nicht mehr möglich, denn es müssen dann die einzelnen kleinen Kapselbehälter aus dem eingebetteten Material entfernt werden, was technisch nicht möglich ist.

Dank der engmaschigen Vernetzung mit den fein verteilten Wärmeleitblechen hat die Erfindung den großen Vorteil einer schnellen und damit auch mit hoher Leistung versehenen Ent- bzw. Beladung. Somit kann nach der Erfindung in kurzer Zeit eine hohe Energiemenge eingespeist oder ausgelagert werden.

Eine hohe Energiemenge bedeutet in Verbindung mit einer hohen Temperaturdifferenz eine effektivere Raum-Kühlung bzw. -Heizung. Z.B. lässt sich bei der Erfindung die Raumluft in kurzer Zeit um den Betrag von ca. < 5 °K abkühlen oder erwärmen. Das gelingt bei den sonstigen Systemen nicht, da die Energie aus dem PCM nur langsam einzulagern bzw. zu entfernen ist.

Diese erfindungsgemäßen Vorzüge bringen entsprechende Vorteile, wie rasche Reaktionszeit, schnelle Be- und Entladung und eine hohe Gesamtleistung Die Erfindung ist deshalb bevorzugt auf eine engmaschige Vernetzung des PCM (mit einem sensationellen Wert von 500m2/m3) gerichtet, und die damit zu erzielenden Vorteile ergeben eine hohe Leistung in kurzer Zeit.

In einer bevorzugten Ausgestaltung der vorliegenden Erfindung ist deshalb in einem Gehäuse eines derartigen mobilen Luftklimagerätes ein von Wasser durchströmter Latentwärmespeicher vorhanden, dem ein Luft-Wasser-Wärmetauscher vorgeschaltet ist, wobei die zu kühlende oder klimatisierende Luft dem Luft-Wasser-Wärmetauscher zugeführt wird und der von dem Latentwärmespeicher erzeugte, abgekühlte Wasserstrom in den Luft-Wasser-Wärmetauscher eingeführt wird, so dass es in diesem zu einer Abkühlung der zugeführten Luft führt.

Diese abgekühlte Klimaluft kann nun unmittelbar in einen Raum einströmen, wobei bevorzugt für das Ansaugen der Raumluft und für das Ausstoßen der Klimaluft ein einziger, Niedrigenergie verbrauchender Ventilator verwendet wird.

Ein solcher Ventilator verbraucht maximal eine Energie von 30 Watt, während die bekannten Klimageräte, die auch als Klima-Split-Geräte ausgebildet sind, mindestens einen Stromverbrauch von 2 bis 3 kW aufweisen.

Mit der vorliegenden Erfindung werden also die Vorteile eines Latentwärmespeichers genutzt, wobei der vereinfachten Beschreibung wegen in der folgenden Beschreibung nur von dem Kühlvorgang die Rede ist, d. h. eine Raumlufttemperatur mit erhöhter Temperatur wird auf eine niedrigere Temperatur führende Klimaluft heruntergekühlt.

Selbstverständlich umfasst die vorliegende Erfindung auch eine Aufheizung einer kühleren in den Wärmetauscher eingesaugten Luft, die dann durch die Energiezufuhr in dem aufgeheizten Latentwärmespeicher zu einer höheren Temperatur führenden Klimaluft umgewandelt wird.

Vorteil der Erfindung ist, dass zur Wärmeversorgung oder zum Wärmeentzug des Latentwärmespeichers nunmehr die Umgebung verwendet werden kann, was bisher nicht bekannt war.

Wenn es beispielsweise darum geht, dass in einem Raum ein mobiles Gerät, z.B. in der Form einer rollbaren oder tragbaren kleinen zylindrischen Säule aufgestellt werden soll, dann reicht es aus, wenn man in der Nacht ein solches Gerät nach außen in die kühlere Außenluft stellt, so dass damit der Latentwärmespeicher von der kühleren Außenluft umstrichen wird und sich dann automatisch abkühlt und die Temperatur und Wärmeenergie der kühleren Außenluft aufnimmt.

Er erfährt also durch einfaches Aufstellen in einer kühleren Außenatmosphäre einen Wärmeentzug, und dieser Wärmeentzug kann für eine Dauer von mindestens 3 bis 4 Stunden genutzt werden, wenn das Klimagerät nach erfolgter Abkühlperiode während der Nacht in einen zu klimatisierenden Raum geschoben wird.

Der im Latentwärmespeicher stattgefundene Wärmeentzug wird nun für die Kühlung der Raumluft verwendet, die durch den einfachen Ventilator angesaugt wird und der in einem ständigen Wasserkreislauf umgewälzte niedrigere Wassertemperatur, die durch den Latentwärmespeicher hindurchfließt, wird in den Luft-Wasser-Wärmetauscher eingespeist und führt dort zur Abkühlung der Raumluft, die als klimatisierte Luft später als "Klimaluft" bezeichnet wird.

Damit ist es erstmals möglich, in einem Latentwärmespeicher einen Wärmeentzug durch einfaches Bewegen des Latentwärmespeichers in eine kühlere Umgebung zu nutzen, und nach erfolgter Abkühlung des Latentwärmespeichers wird dieser dann an den Ort seiner Klimatisierungsaufgabe verbracht, wo dann die ihm zugeführte wärmere Raumluft auf eine kühlere Klimaluft abgekühlt wird.

Selbstverständlich sind Vorkehrungen getroffen, die bei einer Kondensation der abzukühlenden Raumluft für eine Abführung des Kondenswassers sorgen.

In einer bevorzugten Ausgestaltung weist der Latentwärmespeicher als Speichermedium ein im fraglichen Temperaturbereich den Aggregatzustand wechselndes Medium auf.

Es wurde festgestellt, dass als ideales Medium ein Fett verwendet wird, wie es als Kochfett unter dem Markennamen "Biskin" in der Industrie und im Haushalt üblich ist.

Ein solches Kochfett hat bei Raumtemperatur eine feste Konsistenz und damit entsprechend einen ersten Aggregatzustand und bei erhöhter Raumtemperatur von z. B. 30° Celsius verflüssigt es sich langsam und geht in den Schmelzzustand über, wo ein zweiter Aggregatzustand herrscht,

Es wurde nun festgestellt, dass im Bereich zwischen den beiden Aggregatzuständen der Latentwärmespeicher trotz Zuführung einer Wärmeenergie nicht mehr seine Temperatur erhöht oder erniedrigt. Er bleibt also in seinem latenten Zustand trotz Zuführung von Energie immer in einem gleichmäßigen Aggregatzustand und es kann deshalb dem abgekühlten Latentwärmespeicher nunmehr eine relativ große Energie als Kühlenergie entzogen werden, die zur Abkühlung der aufgeheizten Raumluft dient, ohne dass sich der Aggregatzustand des Latentwärmespeichers ändert oder er sich in unzulässiger Weise aufheizt.

Somit ist über eine gewisse Zeit von z. B. 8 Stunden sichergestellt, dass die latente Energie des Wärmespeichers gleichmäßig entnommen werden kann, ohne dass sich in dieser Zwischenzeit die Temperatur des Latentwärmespeichers erhöht.

In einer bevorzugten Ausgestaltung der Erfindung ist ein solches mobiles Raumklimagerät als blockförmiges oder zylinderförmiges Gehäuse ausgebildet, welches in seinem Innenraum eine Anzahl von Wärmetauschermodulen enthält, wobei jedes Wärmetauschermodul aus einander gegenüberliegenden einlauf- und auslaufseitigen Verteilerkästen besteht, die über eine Vielzahl von Einlauföffnungen durch zugeordnete Verbindungsrohre miteinander verbunden sind, so dass über die einlauf- und auslaufseitig angeordneten Verteilerkästen das Wasser als Wärmeträgermedium hindurchströmt und das im Zwischenraum zwischen den Verbindungsrohren angeordnete PCM-Material entsprechend kühlt oder erwärmt.

Zur besseren Wirksamkeit der Wärmedurchdringung des flüssigen, halbflüssigen oder erstarrten Fettmaterials wird es bevorzugt, wenn die im Wärmetauschermodul angeordneten Verbindungsrohre noch mit zusätzlichen Konvektorblechen versehen sind, die wärmeleitend mit einer Vielzahl dieser Verbindungsrohre verbunden sind, um so eine Wärmedurchdringung des kompletten Innenraumes des Gehäuses des Pufferspeichers zu erreichen.

Damit wird eine intensive, gleichmäßig sich über das Volumen des Pufferspeichers erfolgende Wärme- oder Kältebeeinflussung des im Zwischenraum zwischen den Konvektorblechen und den Verbindungsrohren des Wärmetauschermoduls angeordneten Materials erreicht.
Ein solches mobiles Klimagerät hat beispielsweise Abmessungen von Durchmesser 40 cm und eine Höhe von 80 cm.

Es kann auch als Block in einer ähnlichen Abmessung verwendet werden, und der Kern liegt darin, dass man eben den Latentwärmespeicher durch Verbringen in ein anderes Temperaturmedium (z. B. in die Außenluft) in seinem Wärmeinhalt verändert.

Es bedarf deshalb keines Kompressors mehr und keines Expansionsventils, um eine maschinengestützte Kühlung zu erreichen.

Vorteil des mobilen Klimagerätes ist demzufolge auch die geringe Geräuschentwicklung und der geringe Energieverbrauch.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Blockschaltbild eines mobilen Klimagerätes nach der Erfindung
- Figur 2:: schematisiert eine perspektivische Darstellung eines Wärmetauschermoduls
- Figur 3:: der aus den parallel geschalteten Wärmetauschermodulen zusammengesetzte Pufferspeicher nach der Erfindung
- Figur 4:: die Stirnansicht des Pufferspeichers nach Figur 3
- Figur 5:: die Draufsicht auf den Pufferspeicher nach Figur 3
- Figur 6:: ein Schnitt durch ein mobiles Klimagerät nach der Erfindung
- Figur 7:: Schnitt gemäß der Linie 2-2 in Figur 6
- Figur 8:: ein weiterer Schnitt durch das Klimagerät nach Figur 6
- Figur 9:: Schnitt gemäß der Linie IX-IX in Figur 8
- Figur 10:: Darstellung des Wärme- und Temperaturverlaufes über die Zeit beim Betrieb eines Pufferspeichers

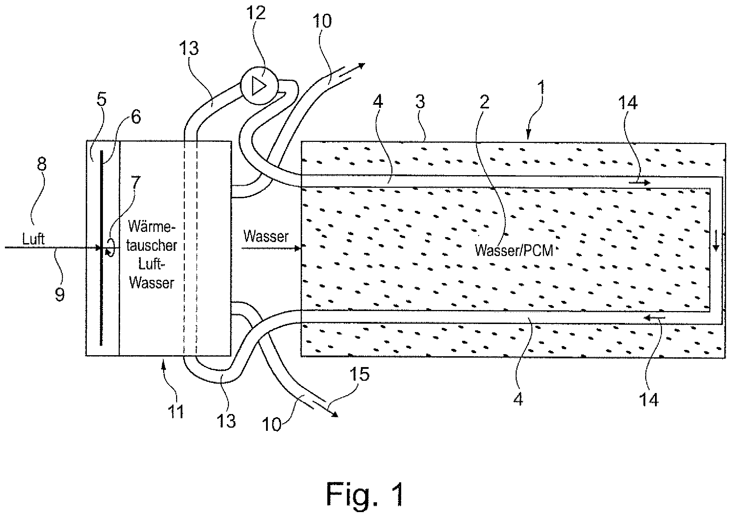

In Figur 1 ist schematisiert ein Pufferspeicher 1 dargestellt, der im Wesentlichen aus einem Gehäuse 3 besteht, in dessen Innenraum ein Material für einen Latentwärmespeicher vorhanden ist, wobei dieses PCM-Material nachfolgend mit dem Bezugszeichen 2 bezeichnet ist. Es handelt sich um eine fettartige Konsistenz, die mit einem Schaltpunkt von z. B. 21° arbeitet, bei welchem sich der Aggregatzustand des verwendeten Fettes ändert und von fest in flüssig übergeht. Als PCM-Material in dieser Ausführung wird ein Parafin bevorzugt.

In einer anderen Ausgestaltung kann der Latentwärmespeicher Natriumacetat-Trihydrat als Wärmespeicher für den niedrigen Temperaturbereich verwenden. Solche Wärmespeicher oder auch "phase change materials" (PCM) genannt, sind in der Lage Energie durch Kristallisations- und Lösungsprozesse umzusetzen.

Im Gehäuse 3 des Pufferspeichers 1 sind eine Anzahl von Wärmetauschermodulen 4 angeordnet, die in Figur 1 lediglich schematisiert dargestellt sind.

Der gesamte Pufferspeicher 1 ist demzufolge von einem Wasserstrom durchströmt, der von einer Wasserpumpe 12 erzeugt wird und der über die Rohre 13 in einen Wärmetauscher 11 geleitet sind, der als Luft-Wasser-Wärmetauscher ausgebildet ist.

Der Pufferspeicher 1 ist also als Wasser-PCM-Tauscher ausgebildet, während der Wärmetauscher 11 als Luft-Wasser-Wärmetauscher ausgebildet ist.

Der Wasserstrom durch den Pufferspeicher 1 ist in einem geschlossenen Kreislauf vorhanden, so dass das Wasser stets in Pfeilrichtung 14 hindurchfließt.

Im Luft-Wasser-Wärmetauscher 11 wird der Luftstrom 8 und 9 von einem Ventilator 5 und einen oder mehreren Ventilatorschaufeln 6 angesaugt und wird durch den Wärmetauscher 11 hindurchgedrückt. Der Wärmetauscher 11 ist in an sich bekannter Weise als Luft-Wasser-Wärmetauscher ausgebildet und ist am besten mit einem Kühlwasserwärmetauscher aus einem Kraftfahrzeug vergleichbar.

Der Ventilator 5 fährt eine relativ geringe Leistung, weil es ausreicht, einen relativ geringen Luftstrom durch den Wärmetauscher 11 zu pressen, der dann als klimatisierter Luftstrom (Klimaluft 32) aus den Ausströmrohren 10 in den zu klimatisierten Raum in Pfeilrichtung 15 ausströmt.

Der Einfachheit halber wird noch dargestellt, dass die Ventilatorschaufel 6 und die Drehachse 7 von einem nicht näher dargestellten Motor drehend angetrieben ist.

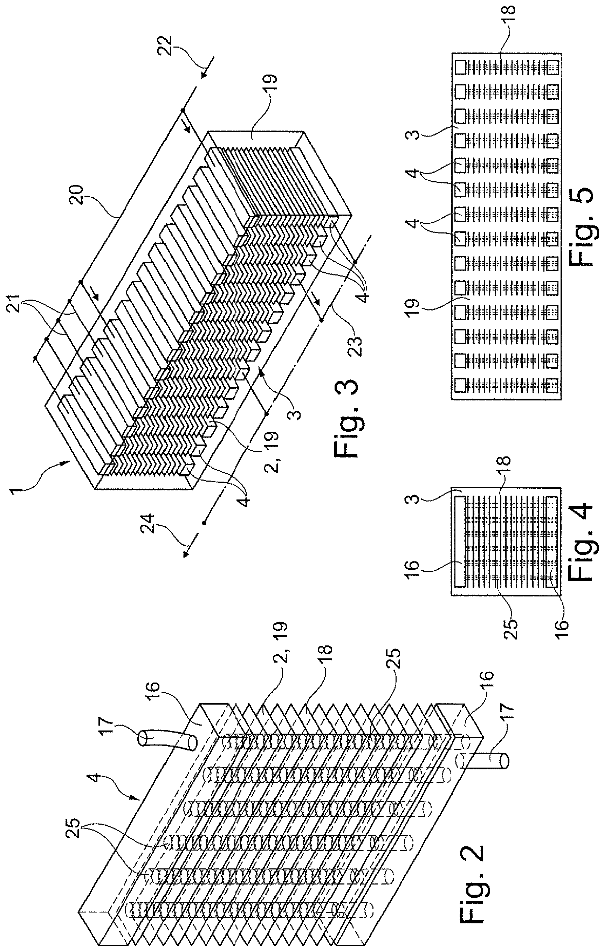

Aus Figur 2 und 3 sind weitere Einzelheiten eines Wärmetauschermoduls 4 entnehmbar. Es handelt sich um einen Wasser-Wärmetauscher, der mit dem im Innenraum angeordneten Material 2 den Wärmeverbund eingeht.

Am oberen Verteilerkasten 16 ist ein Stutzen 17 für den Einlauf von Wasser angeordnet, welches gleichmäßig über den Verteilerkasten 16 verteilt in die verschiedenen, parallel dort anschließenden Verbindungsrohre 25 einströmt.

Alle Verbindungsrohre 25 sind mit zugeordneten Konvektorblechen 18 verbunden, und im Zwischenraum zwischen den Konvektorblechen 18 ist das fettartige Material 2 des PCM-Speichers gleichmäßig verteilt und wärmeübertragend angeordnet.

Alle Verbindungsrohre 25 münden in den auslaufseitigen Verteilerkasten 17, wo das Wasser wieder den unteren Stutzen 17 verlässt.

Die Figur 3 zeigt, dass eine Vielzahl derartiger Wärmetauschermodule 4 insgesamt nunmehr den Pufferspeicher 1 bilden, in dessen Gehäuse nunmehr das PCM-Material eingefüllt ist und vollkommen formschlüssig und spaltfüllend alle Konvektorbleche 18 und alle dort angeordneten Wärmetauschermodule 4 und die dazugehörenden Verbindungsrohre 25 umschließt.

Auf diese Weise wird eine gleichmäßige Verteilung der Wärme oder der Wärmeabgabe auf alle Wärmetauschermodule 4 gewährleistet.

Als Beispiel ist in Figur 3 dargestellt, dass eine gemeinsame Sammelleitung 20 in Pfeilrichtung 22 mit einem Wasserstrom versorgt wird, der in Parallelschaltung auf sämtliche Wärmetauschermodule 4 einfließt.

Diese werden von dem Wasser durchflossen und fließen nach unten aus den unteren Verteilerkästen 16 wieder über eine unten angeordnete Sammelleitung 23 raus und das Wasser verlässt dann in Pfeilrichtung 24 den Pufferspeicher 1 und geht in den Wärmetauscher 11, wie in Figur 1 gezeigt.

Die Einlaufseite und die Auslaufseite des Pufferspeichers 1 ist also gemäß Figur 1 an dem Wärmetauscher 11 angeschlossen.

Die Figuren 4 und 5 zeigen jeweils die Stirnansicht und die Draufsicht auf den Pufferspeicher 1, wo unter anderem auch entnehmbar ist, dass der Innenraum 19 vollständig mit dem Wärme führenden PCM-Material 2 gefüllt ist.

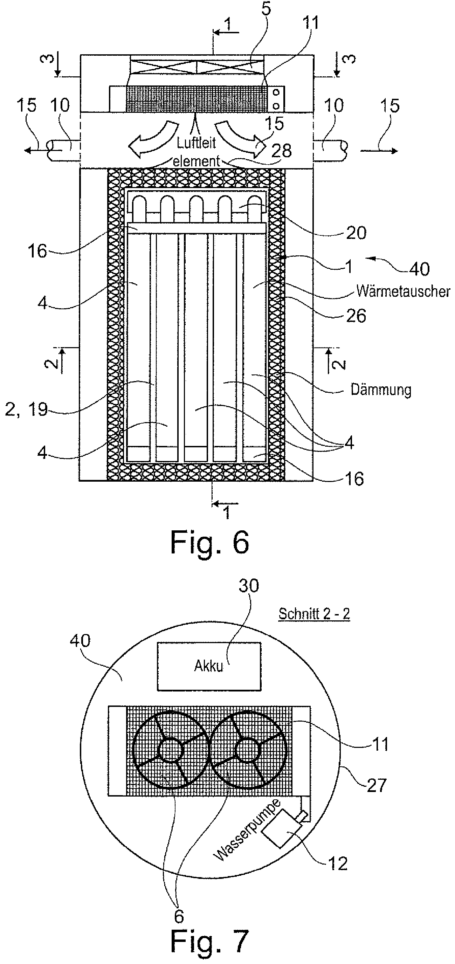

Die Figuren 6 bis 9 zeigen eine praktische Ausführung eines mobilen Klimagerätes, welches im Wesentlichen aus einem Gehäuse 27 besteht, in dessen Innenraum der erfindungsgemäße Pufferspeicher 1 angeordnet ist.

Er ist an seiner Außenseite von einer umschließenden wärmedämmenden Dämmschicht 26 umgeben, und aus Figur 6 und Figur 7 ergibt sich, dass der obere Ventilator 5 zwei Ventilatorschaufeln 6 aufweisen, die den durch den Wärmetauscher 11 abgekühlten Luftstrom in Pfeilrichtung 15 über zugeordnete Luftleitelemente 28 nach außen über die raumseitig angeordneten Ausströmrohre 10 führt.

Die Klimaluft 32 strömt demnach in Pfeilrichtung 15 aus den raumseitigen Ausströmrohren 10 aus.

Der Pufferspeicher weist in seinem Innenraum eine Vielzahl der bereits beschriebenen Wärmetauschermodule 4 auf, und es sind noch die oberen und unteren Verteilerkästen 16 erkennbar sowie die obere Sammelleitung 20, die über Abzweige 21 in die jeweiligen Wärmetauschermodule 4 einführen.

Der Raum 19 ist mit dem Wärme aufnehmenden und Wärme abgebenden PCM-Material 2 gefüllt.

Die Figur 7 zeigt, dass der Ventilator 5 durch einen Akku 30 angetrieben sein kann, so dass auf einen Netzanschluss vollkommen verzichtet werden kann. Es ist ferner eine Wasserpumpe 12 dargestellt, die ebenfalls von dem Akku 30 mit Strom versorgt wird.

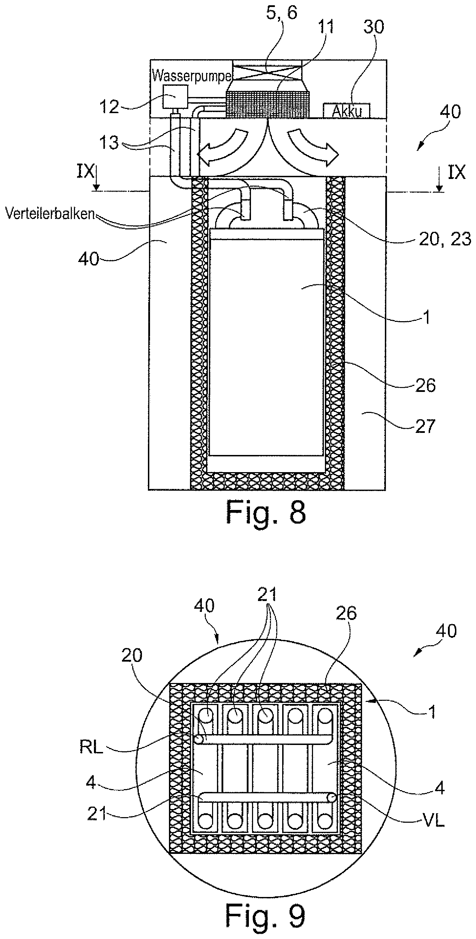

Die Figuren 8 und 9 zeigen weitere Einzelheiten des gleichen mobilen Klimagerätes 40, wo erkennbar ist, dass der Pufferspeicher 1 relativ massiv ausgebildet ist und es sind ferner die Sammelleitungen 20 und 23 dargestellt.

Aus Figur 8 ergibt sich auch, dass die Wasserpumpe 12 über die Anschlussleitungen (Rohre 13) mit dem Zulauf und dem Ablauf des Pufferspeichers 1 verbunden ist.

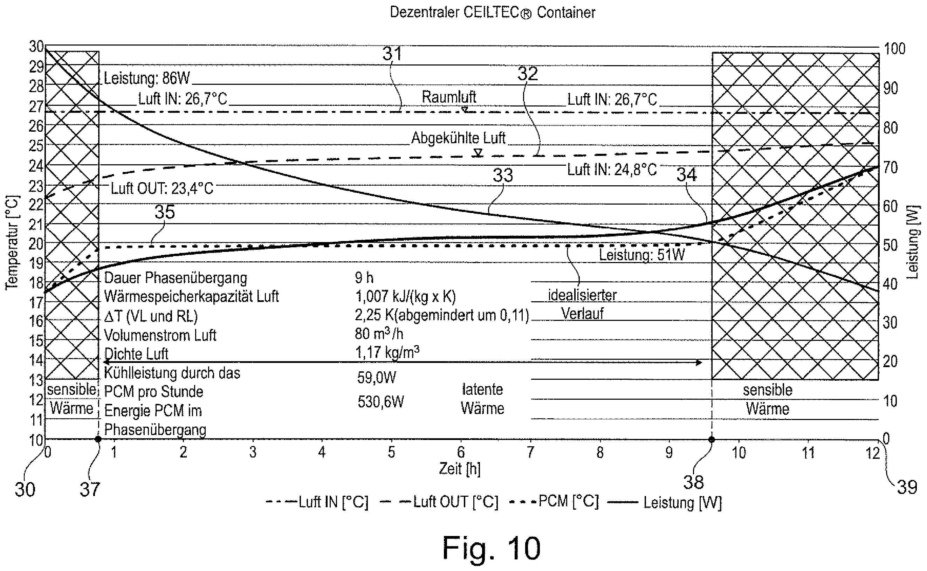

Die Figur 10 zeigt nun ein thermisches Ausführungsbeispiel, wobei auf der Ordinate die Temperatur in °C aufgetragen ist (links) und ebenso parallel die Leistung in Watt, die aus dem Pufferspeicher entnommen oder zugeführt werden kann.

Auf der Abszisse ist die Zeit in Stunden aufgetragen, und die obere Kurve ist die Raumlufttemperaturkurve 31, die beispielsweise eine Lufttemperatur von 26,7 °C aufweist.

Aufgabe ist nun, mit dem erfindungsgemäßen mobilen Klimagerät dieser Raumlufttemperatur 31 auf einen niedrigeren Wert abzukühlen, wie er mit der Klimaluftkurve 32 darunter liegend angegeben ist.

Die Klimaluftkurve 32 hat hierbei eine Lufttemperatur von 24,8 °C.

Der Unterschied zwischen den beiden Kurven 31, 32 ist der Wirkung des mobilen Klimagerätes zuzuschreiben.

Die darunter liegende Energieentnahmekurve 33 ist die Kurve der Energieentnahme aus dem Latentwärmespeicher, und es ist erkennbar, dass diese Energie zwischen den Positionen 37 und 38 für eine Zeitdauer von etwa 8 Stunden genutzt werden kann.

Die darunter liegende Kurve 34 zeigt die PCM-Temperaturkurve 34, und die darunter liegende Kurve 35 ist die PCM-Idealkurve 35, die sich nur im Idealzustand einstellt.

Ausgehend von der 0-Position im Diagramm bei Position 36 schließt sich daran ein Bereich der sensiblen Wärme bis zur Position 37 an, was bedeutet, dass in diesem Bereich eine lineare Kopplung der Temperatur mit der Wärmeentnahme verbunden ist, wie sich anhand der Kurve 35 dort zwischen Position 36 und 37 zeigt.

Dieser Bereich ist für eine Klimatisierung schlecht geeignet.

Bei der Position 37 bis zur Position 38 (für eine Dauer von 8 Stunden) kann die latente Wärme des Pufferspeichers genutzt werden, wie sich dies auch aus der PCM-Temperaturkurve 34 ergibt.

Trotz einer Wärmeübertragung vom Wärmeinhalt des Pufferspeichers auf die Raumluft zwecks Abkühlung in die Klimaluftkurve 32 ändert sich die Temperatur im latenten Wärmespeicher nicht, so dass eine gleichmäßige Wärmeentnahme über eine Dauer von 8 Stunden gewährleistet ist.

Es wurde festgestellt, dass in diesem Bereich eine Leistungsentnahme im Bereich zwischen 86 Watt bei Position 37 bis 51 Watt bei Position 38 möglich ist.

Die Differenz dieser beiden Watt-Angaben ist die Leistungsfähigkeit des Pufferspeichers zwecks Abkühlung der Raumluft 31.

Ab der Position 38 auf der Abszisse bis zur Position 39 tritt der andere Aggregatzustand des PCM-Materials 2 ein, und damit ist nicht mehr gewährleistet, dass eine konstante Wärmeentnahme aus dem PCM-Material gewährleistet ist.
Es wird deshalb nur die Wärmeentnahme zwischen der Position 37 und 38 bevorzugt.

Als Beispiel wird angegeben, dass die Dauer für den Phasenübergang des PCM-Materials 9 Stunden beträgt. Die Wärmespeicherkapazität der Luft beträgt 1,007 kJ (Kilogramm x K).

Das Delta t (VL und RL) beträgt 2,25 K (abgemindert um 0,11) und der Volumenstrom der Luft beträgt 80 Kubikmeter pro Stunde.

Die Dichte der Luft ist mit 1,17 Kilogramm pro Kubikmeter angegeben und die Kühlleistung durch das PCM pro Stunde beträgt 59,0 Watt.

Die Energie des PCM im Phasenübergang beträgt 530,6 Watt. Diese Energie kann gespeichert und abgerufen werden.

Es handelt sich lediglich um ein Klimamodell mit Beispielkurven, die den Schutzbereich der vorliegenden Erfindung in keiner Weise einschränken sollen. Es soll nur nachgewiesen werden, dass es sich um ein ausführbares Beispiel handelt, weiches zu einer wirksamen Abkühlung der Raumluft von einer Temperatur von 26,7 auf 24,8 °C ausreicht.

Im gezeigten Ausführungsbeispiel erfolgte die Abkühlung des PCM-Materials 2 durch kalte Außenluft, indem der Pufferspeicher für eine Dauer von 5 bis 8 Stunden verbracht wurde, wobei die kalte Außenluft mit etwa 15 °C angegeben wird. Eine solche Abkühlung kann z. B. durch die kalte Nachtluft erfolgen. Nach erfolgter Abkühlung wird das Luftklimagerät in den zu klimatisierenden Raum verbracht.

In einer anderen Ausführung kann die Trennung des Pufferspeichers 1 vom Klimagerät vorgesehen sein. In diesem Fall wird der Pufferspeicher allein einer kalten Umgebung für den angegebenen Zeitraum ausgesetzt und nach erfolgter Aufladung wieder mit dem Klimagerät gekoppelt. Danach wird das so zusammen gesetzte Klimagerät in den zu klimatisierenden Raum verbracht.

### Zeichnunasiegende

- 1: Pufferspeicher
- 2: Material (PCM)
- 3: Gehäuse
- 4: Wärmetauschermodul
- 5: Ventilator
- 6: Ventilatorschaufel
- 7: Drehachse
- 8: Luftstrom
- 9: Pfeilrichtung
- 10: Ausströmrohr
- 11: Wärmetauscher
- 12: Wasserpumpe
- 13: Rohr
- 14: Pfeilrichtung
- 15: Pfeilrichtung
- 16: Verteilerkasten
- 17: Stutzen
- 18: Konvektorblech
- 19: Innenraum
- 20: Sammelleitung
- 21: Abzweige
- 22: Pfeilrichtung
- 23: Sammelleitung
- 24: Pfeilrichtung
- 25: Verbindungsrohr
- 26: Dämmschicht
- 27: Gehäuse
- 28: Luftleitelement
- 29: Pfeilrichtung
- 30: Akku
- 31: Raumlufttemperaturkurve
- 32: Klimaluftkurve
- 33: Energieentnahmekurve
- 34: PCM-Temperaturkurve
- 35: PCM-Idealkurve
- 36: Position
- 37: Position
- 38: Position
- 39: Position
- **40**: mobiles Klimagerät

## Patentansprüche

1. Mobiles Luftklimagerät zur Klimatisierung der Raumluft in einem Gebäude mit einem Pufferspeicher (1), der als Latentwärmespeicher unter Verwendung eines PCM-Materials (2) ausgebildet ist, **dadurch gekennzeichnet, dass** als PCM-Material (2) insbesondere ein Paraffin-Material verwendet wird, dass im Innenraum des Gehäuses (3) des Pufferspeichers (1) das PCM-Material (2) spaltfüllend im Zwischenraum zwischen wasserdurchflossenen Wärmetauschermodulen (4) angeordnet ist, und dass die wasserführende Leitung durch die Wärmetauschermodule (4) in einen Luft-Wasser-Wärmetauscher (11) geführt ist, der von der zu klimatisierenden Raumluft durchströmt ist, und
dass die Wärmetauschermodule (4) Verbindungsrohre (25) aufweisen, die außenseitig mit zugeordneten Konvektorblechen (18) verbunden sind, wobei im Zwischenraum zwischen den Konvektorblechen (18) das PCM-Material (2) spaltfüllend gleichmäßig verteilt und wärmeübertragend angeordnet ist.

2. Luftklimagerät nach Anspruch 1, **dadurch gekennzeichnet, dass** der Wasserstrom durch den Pufferspeicher (1) in einem geschlossenen Kreislauf durch den Luft-Wasser-Wärmetauscher (11) geführt ist, der von einem die Raumluft fördernden Ventilator (5) beströmt ist.

3. Luftklimagerät nach Anspruch 1 oder 2, **dadurch gekennzeichnet, dass** im Pufferspeicher (1) eine Anzahl von parallel von dem Wasserstrom durchflossene Wärmetauschermodule (4) angeordnet sind.

4. Luftklimagerät nach Anspruch 2 oder 3, **dadurch gekennzeichnet, dass** im Pufferspeicher (1) ein oberer Verteilerkasten (16) mit einem Stutzen (17) für den Einlauf von Wasser angeordnet ist, welches gleichmäßig über den Verteilerkasten (16) verteilt in die verschiedenen, parallel anschließenden Verbindungsrohre (25) zur Einlaufseite der Wärmetauschermodule (4) einströmt.

5. Luftklimagerät nach einem der Ansprüche 1 bis 4, **dadurch gekennzeichnet, dass** es aus einem fahrbaren Gehäuse (27) besteht, in dessen Innenraum der Pufferspeicher (1) angeordnet ist, und dass ein oberer Ventilator (5) den durch den Wärmetauscher (11) abgekühlten Luftstrom über Luftleitelemente (28) seitlich nach außen in den zu klimatisierenden Raum einbläst.

6. Luftklimagerät nach einem der Ansprüche 1 bis 5, **dadurch gekennzeichnet, dass** der Ventilator (5) und die Wasserpumpe (12) für den Pufferspeicher (1) von einem Akku (30) angetrieben sind.

7. Verfahren zum Betrieb eines Luftklimagerätes mit einem PCM-Pufferspeicher (1) nach Anspruch 1, **dadurch gekennzeichnet, dass** die Abkühlung des PCM-Materials (2) durch kalte Außenluft dadurch erfolgt, dass das insbesondere der PCM-Pufferspeicher (1) vom dem Luftklimagerät abgekoppelt wird, und das Luftklimagerät oder der vom Luftklimagerät abgekoppelte PCM-Pufferspeicher (1) für eine Dauer von 5 bis 8 Stunden in eine kalte Umgebung mit einer Außenluft von z. B. 15 °C verbracht wird, und dass nach erfolgter Abkühlung das Luftklimagerät oder der wieder mit dem Luftklimagerät gekoppelte PCM-Pufferspeicher (1) in den zu klimatisierenden Raum verbracht wird.

8. Verfahren nach Anspruch 7, **dadurch gekennzeichnet, dass** die Energie des Pufferspeichers (1) für eine Zeitdauer von etwa 8 Stunden genutzt werden kann.

9. Verfahren nach einem der Ansprüche 7 oder 8 mit einer Vorrichtung nach einem der Ansprüche 1 bis 6, **dadurch gekennzeichnet, dass** der Grad der Benetzung des PCM-Materials (1) im Gehäuse (4) sich aus der gesamten Fläche der Konvektorbleche (18) bezogen auf das Volumen des gespeicherten PCM berechnet und vorzugsweise einen Wert von 500 m2/m3 aufweist.

10. Verfahren nach Anspruch 9, **dadurch gekennzeichnet, dass** der Wert der Benetzung des PCM-Materials (1) im Gehäuse (4) auf die Fläche der Konvektorbleche (18) aufteilbar ist, die bevorzugt Abmessungen von 1,0m x 1,0m aufweisen, und dass sich daraus ein Abstand von 2mm zwischen den Konvektorblechen (18) ergibt.

11. Verfahren nach einem der Ansprüche 7 bis 10, **dadurch gekennzeichnet, dass** der Wasserkreislauf (11, 12) der mobilen Luftklimageräts an den Wasserkreislauf in einer bauteilaktivierten Gebäude-Klimadecke flüssigkeitsleitend anschließbar ist.

12. Verfahren nach Anspruch 11, **dadurch gekennzeichnet, dass** der mit dem PCM-Material (2) gefüllte Pufferspeicher (1) unmittelbar in den Deckenhohlraum der Gebäude-Klimadecke eingebaut wird.

## Claims

1. Mobile air-conditioning unit for air-conditioning the room air in a building with a buffer store (1) which is designed as a latent heat store using a PCM material (2), **characterised in that** in particular a paraffin material is used as the PCM material (2), **in that** in the interior of the housing (3) of the buffer store (1), the PCM material (2) is arranged to fill a gap in the space between heat-exchanger modules (4) with water flowing through, and **in that** the water-conveying pipe is guided through the heat-exchanger modules (4) into an air-water heat exchanger (11) through which room air to be air-conditioned flows, and **in that** the heat-exchanger modules (4) have connecting tubes (25) which are connected to assigned convector plates (18) on the outer side, wherein the PCM material (2) is arranged distributed uniformly to fill a gap and to transfer heat in the space between the convector plates (18).

2. Air-conditioning unit according to claim 1, **characterised in that** the water stream through the buffer store (1) is guided in a closed circuit through the air-water heat exchanger (11) which is supplied by a fan (5) conveying the room air.

3. Air-conditioning unit according to claim 1 or 2, **characterised in that** a number of heat-exchanger modules (4) with the water stream flowing through in parallel are arranged in the buffer store (1).

4. Air-conditioning unit according to claim 2 or 3, **characterised in that** an upper distribution box (16) with a fitting (17) for inflow of water, which flows into the various connecting tubes (25) connected in parallel distributed uniformly over the distribution box (16) to the inflow side of the heat-exchanger modules (4), is arranged in the buffer store (1).

5. Air-conditioning unit according to one of claims 1 to 4, **characterised in that** it consists of a movable housing (27) in the interior of which the buffer store (1) is arranged, and **in that** an upper fan (5) blows the air stream cooled by the heat exchanger (11) via air-conducting elements (28) laterally outwards into the room to be air-conditioned.

6. Air-conditioning unit according to one of claims 1 to 5, **characterised in that** the fan (5) and the water pump (12) for the buffer store (1) are driven by a battery (30).

7. Method for operating an air-conditioning unit with a PCM buffer store (1) according to claim 1, **characterised in that** cooling of the PCM material (2) is effected by cold external air, **in that** in particular the PCM buffer store (1) is uncoupled from the air-conditioning unit, and the air-conditioning unit or the PCM buffer store (1) uncoupled from the air-conditioning unit is passed into a cold environment with external air at, for example 15 °C, for a period of 5 to 8 hours, and **in that** after cooling has taken place, the air-conditioning unit or the PCM buffer store (1) re-coupled to the air-conditioning unit is passed into the room to be air-conditioned.

8. Method according to claim 7, **characterised in that** the energy of the buffer store (1) may be used for a period of time of about 8 hours.

9. Method according to one of claims 7 or 8 with a device according to one of claims 1 to 6, **characterised in that** the degree of wetting of the PCM material (1) in the housing (4) is calculated from the total surface of the convector plates (18) relative to the volume of the stored PCM and preferably has a value of 500 m2/m3.

10. Method according to claim 9, **characterised in that** the value of wetting of the PCM material (1) in the housing (4) can be distributed on the surface of the convector plates (18) which preferably have dimensions of 1.0 m x 1.0 m, and **in that** a distance of 2 mm between the convector plates (18) is produced therefrom.

11. Method according to one of claims 7 to 10, **characterised in that** the water circuit (11, 12) of the mobile air-conditioning unit can be connected to the water circuit in a component-activated building air-conditioning ceiling to conduct liquid.

12. Method according to claim 11, **characterised in that** the buffer store (1) filled with the PCM material (2) is installed directly into the ceiling cavity of the building air-conditioning ceiling.

## Revendications

1. Appareil de conditionnement d'air mobile pour conditionner l'air ambiant dans un bâtiment avec un accumulateur tampon (1), qui est réalisé en tant qu'accumulateur de chaleur latente en utilisant un matériau PCM (2), **caractérisé en ce qu'**est utilisé en tant que matériau PCM (2) en particulier un matériau à base de paraffine, que dans l'espace intérieur du boîtier (3) de l'accumulateur tampon (1), le matériau PCM (2) est disposé de manière à remplir un interstice dans l'espace intermédiaire entre des modules échangeurs de chaleur (4) traversés par de l'eau, et que le conduit d'acheminement d'eau est guidé à travers les modules échangeurs de chaleur (4) dans un échangeur de chaleur air-eau (11), qui est traversé par l'air ambiant à conditionner, et
**que** les modules échangeurs de chaleur (4) présentent des tubes de liaison (25), qui sont reliés côté extérieur à des tôles de convecteur (18) associées, dans lequel le matériau PCM (2) est disposé de manière à remplir un interstice avec une répartition homogène et avec transfert de chaleur dans l'espace intermédiaire entre les tôles de convecteur (18).

2. Appareil de conditionnement d'air selon la revendication 1, **caractérisé en ce que** le flux d'eau à travers l'accumulateur tampon (1) est guidé dans un circuit fermé à travers l'échangeur de chaleur air-eau (11), qui est alimenté en courant par un ventilateur (5) refoulant l'air ambiant.

3. Appareil de conditionnement d'air selon la revendication 1 ou 2, **caractérisé en ce qu'**un nombre de modules échangeurs de chaleur (4) traversés en parallèle par le flux d'eau sont disposés dans l'accumulateur tampon (1).

4. Appareil de conditionnement d'air selon la revendication 2 ou 3, **caractérisé en ce qu'**est disposé dans l'accumulateur tampon (1) un boîtier de distribution supérieur (16) pourvu d'une tubulure (17) pour l'admission d'eau, laquelle afflue selon une répartition homogène par l'intermédiaire du boîtier de distribution (16) dans les différents tubes de liaison (25) se raccordant en parallèle vers le côté d'admission des modules échangeurs de chaleur (4).

5. Appareil de conditionnement d'air selon l'une des revendications 1 à 4, **caractérisé en ce qu'**il est constitué d'un boîtier (27) pouvant être déplacé, dans l'espace intérieur duquel est disposé l'accumulateur tampon (1), et qu'un ventilateur supérieur (5) souffle latéralement vers l'extérieur dans l'espace à conditionner par l'intermédiaire d'éléments de guidage d'air (28) le flux d'air refroidi par l'échangeur de chaleur (11).

6. Appareil de conditionnement d'air selon l'une des revendications 1 à 5, **caractérisé en ce que** le ventilateur (5) et la pompe à eau (12) pour l'accumulateur tampon (1) sont entraînés par une batterie (30).

7. Procédé pour faire fonctionner un appareil de conditionnement d'air avec un accumulateur tampon PCM (1) selon la revendication 1,
**caractérisé en ce que** le refroidissement du matériau PCM (2) est effectué par de l'air extérieur froid **en ce qu'**en particulier l'accumulateur tampon PCM (1) est découplé de l'appareil de conditionnement d'air, et l'appareil de conditionnement d'air ou l'accumulateur tampon PCM (1) découplé de l'appareil de conditionnement d'air est amené dans un environnement froid avec un air extérieur de par exemple 15 °C pendant une durée de 5 à 8 heures, et qu'une fois le refroidissement réalisé avec succès, l'appareil de conditionnement d'air ou l'accumulateur tampon PCM (1) couplé à nouveau à l'appareil de conditionnement d'air est amené dans l'espace à conditionner.

8. Procédé selon la revendication 7, **caractérisé en ce que** l'énergie de l'accumulateur tampon (1) peut être utilisée pendant une période d'environ 8 heures.

9. Procédé selon l'une des revendications 7 ou 8 avec un dispositif selon une des revendications 1 à 6, **caractérisé en ce que** le degré d'imprégnation du matériau PCM (1) dans le boîtier (4) est calculé à partir de la totalité de la surface des tôles de convecteur (18) par rapport au volume de PCM stocké et présente de préférence une valeur de 500 m²/m³.

10. Procédé selon la revendication 9, **caractérisé en ce que** la valeur d'imprégnation du matériau PCM (1) dans le boîtier (4) peut être divisée sur la surface des tôles de convecteur (18), qui présentent de manière préférée des dimensions de 1,0 m x 1,0 m, et qu'il en découle une distance de 2 mm entre les tôles de convecteur (18).

11. Procédé selon l'une des revendications 7 à 10, **caractérisé en ce que** le circuit d'eau (11, 12) de l'appareil de conditionnement d'air mobile peut être raccordé de manière à acheminer du liquide au circuit d'eau dans un plafond de conditionnement de bâtiment à composant actif.

12. Procédé selon la revendication 11, **caractérisé en ce que** l'accumulateur tampon (1) rempli du matériau PCM (2) est intégré directement dans la cavité de plafond du plafond de conditionnement de bâtiment.
